(19) Europäisches Patentamt
European Patent Office
Office européen des brevets

(11) Numéro de publication: **0 041 447**
**B1**

(12) **FASCICULE DE BREVET EUROPEEN**

(45) Date de publication du fascicule du brevet: **29.01.86**

(51) Int. Cl.$^4$: **C 07 F 9/50**

(21) Numéro de dépôt: **81400847.0**

(22) Date de dépôt: **26.05.81**

(54) **Procédé de fabrication de phospholes et de phospholes avec substituants fonctionnels sur le phosphore.**

(30) Priorité: **28.05.80 FR 8011818**

(43) Date de publication de la demande:
**09.12.81 Bulletin 81/49**

(45) Mention de la délivrance du brevet:
**29.01.86 Bulletin 86/05**

(84) Etats contractants désignés:
**AT BE CH DE FR GB IT LI NL SE**

(56) Documents cités:
**US-A-3 338 941**

**JOURNAL OF ORGANIC CHEMISTRY, VOL. 38, NO. 10, 1973, US, L.D. QUIN et al.: "Synthesis and spectral characterization of some C-alkylphospholes and phosphole-carboxylates", pages 1858-66**

**TETRAHEDRON, vol. 27, 1971, Pergamon Press, GB, E.H. BRAYE et al.: "Alkali aza-, phospha- and arsacyclopentadienides and their chemical properties", pages 5523-37**

(73) Titulaire: **SOCIETE NATIONALE DES POUDRES ET EXPLOSIFS**
**12, quai Henri IV**
**F-75181 Paris Cedex 04 (FR)**

(72) Inventeur: **Breque, Anne**
**2 Place des Eglantiers**
**F-91540 Mennecy (FR)**
Inventeur: **Muller, Georges**
**139 Route de la Ferté Allais**
**F-91820 Boutigny-Sur-Essonne (FR)**
Inventeur: **Bonnard, Hubert**
**1 Rue des Ecoles**
**F-91220 Bretigny-Sur-Orge (FR)**
Inventeur: **Mathey, François**
**10BBis Quai Henri IV**
**F-75005 Paris (FR)**
Inventeur: **Savignac, Philippe**
**68 Boulevard Péreire**
**F-75017 Paris (FR)**

(74) Mandataire: **Rinuy, Santarelli**
**14, avenue de la Grande Armée**
**F-75017 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 041 447 B1

(56) References cited:
**INFORMATIONS CHIMIE, 1978, no. 179, pages 191-6, F. MATHEY et al.: "Study of new olefin hydroformylation catalysts based on cobalt carbonyl-phosphine complexes"**

**CANADIAN JOURNAL OF CHEMISTRY, 1976, vol. 54(15), pages 2402-10, F. MATHEY et al.: "Synthesis of new phospholenes and phospholes with functional substituents on the phosphorus"**

**Description**

La présente invention concerne l'obtention de phospholes, et phospholes comportant des substituants fonctionnels sur le phosphore, ces composés répondant à la formule générale:

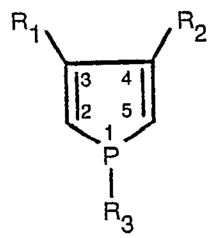

dans laquelle

$R_1$ et $R_2$ sont identiques ou différents et représentent de l'hydrogène ou un groupe alkyle inférieur en $C_1$ à $C_4$ tel qu'un groupe méthyle, et

$R_3$ représente un groupe $—C_6H_5$, $—CH_2—C_6H_5$, $—CH_3$, $—C_2H_5$, $—C_3H_7$ à $C_{12}C_{25}$ ou $—(CH_2)_nZ$ où Z désigne une fonction —COO-alkyle (telle que $—COOC_2H_5$), —CN, —CO-aryle (telle que ($—CO—C_6H_5$), —CO-alkyle (telle que $—CO—CH_3$), ou —OH et $n \geqslant 1$.

Parmi ces composés, ceux répondant à la formule ci-dessus, dans laquelle $R_1$ et $R_2$ ont la signification donnée et $R_3$ représente $—(CH_2)_nZ$ où Z désigne une fonction —COO-alkyle (telle que $—COOC_2H_5$), —CN, —CO-aryle (telle que $—CO—C_6H_5$), —CO-alkyle (telle que $—CO—CH_3$) ou OH et $n \geqslant 1$ avec $n \neq 2$ pour Z = CN, constituent des produits industriels nouveaux.

On salt déjà préparer des phospholes par réaction d'une dihalogénoalkyl- ou aryl-phosphine avec un butadiène dont les carbones en position 2 et/ou 3 portent éventuellement un substituant méthyle pour obtenir un produit d'addition cyclique (dit ci-après "adduit cyclique") (voir les brevets des Etats-Unis d'Amérique N° 2 663 736 et N° 2 663 737 et Chem. Abstracts, 497601a—7602c (1955)), puis à soumettre ledit adduit à l'action du diazobicyclo-undécène (DBU) (voir: F. MATHEY et al. Org. Magn. Resonance, *4,* 171 (1972) et L. D. QUIN et al. J. Org. Chem., *38,* 1858 (1973).

Or, ce procédé de fabrication n'est pas sans présenter des inconvénients résultant de l'utilisation du DBU qui est un produit coûteux (que l'on prépare en trois étapes et qui est difficile à purifier et à sécher), de l'apparition de réactions secondaires compétitives de la réaction principale, des difficultés pratiques de traitement des adduits dûes au caractère de solvant du DBU et enfin des rendements très moyens et de la plus ou moins grande pureté des produits obtenus.

Or la présente invention a pour but notamment de remédier à ces inconvénients et plus spécialement de fournir des phospholes pouvant être obtenus avec de bons rendements et une grande pureté. Cet objectif atteint est d'autant plus intéressant si les besoins de l'industrie en nécessitent de grandes quantités ayant la pureté requise et à un faible prix.

Par ailleurs, à l'heure actuelle, très peu de phospholes P-fonctionnels simples ont été préparés. Or, l'invention vise des phospholes nouveaux et le procédé permettant de les obtenir.

La procédé selon l'invention est essentiellement caractérisé par le fait que l'on fait réagir au moins une alkyl- ou arylhalogénophosphine avec un butadiène dont les carbones en position 2 et/ou 3 portent éventuellement un substituant alkyle inférieur, que l'on soumet l'adduit cyclique résultant de cette réaction à l'action d'une amine tertiaire choisie de préférence parmi celles ayant un pKa compris entre 5 et 11, puis qui l'on soumet le produit résultant à une réaction consistant à couper la liaison P-aryle ou P-alkyle et obtenir un organo-métallique puis, si on désire le produit correspondant P-fonctionnel, fait réagir ledit organo-métallique avec un composé $X—(CH_2)_nZ$, où X est un halogène et Z et n ont la signification précédemment donnée.

Suivant un mode de réalisation avantageux, on fait réagir un mélange de deux halogéno-phosphines différentes.

Dans le cas où on utilise comme arylhalogéno-phosphines les phénylhalogéno-phosphines, celles-ci sont avantageusement choisies parmi les phényldichlorophosphines, et les phényldibromo-phosphines. Lorsqu'on a recours à des mélanges de deux phénylhalogéno-phosphines différentes, ces dernières sont utilisées en proportions égales.

Les amines avantageusement utilisées selon l'invention et conduisant, de façon imprévisible à de bons rendements, sont choisies parmi les picolines, triéthylamine, tétraméthyléthylène diamine, éthyl-2 pyridine, méthyl-morpholine, N-méthyl-imidazole, pyridine, N-méthyl-pyrrolidine, éthyl-4 pyridine.

Suivant un mode de réalisation approprié, la réaction entre le ou les halogéno-phosphines et un butadiène est effectuée vers 0°C et en récipient clos sous atmosphère inerte et en l'absence de tout solvant organique, et la réaction du produit résultant avec l'amine choisie est conduite au sein d'un mélange de diluants organiques inertes dont au moins un est un hydrocarbure saturé.

Suivant un mode de réalisation particulier, la coupure de la liaison P-aryle ou P-alkyle est effectuée par l'action d'un métal alcalin (tel que Li, Na, K) sous forme d'anions radicaux solubilisés (tels que naphtalène sodé, naphtalène lithié, naphtalène potassé), dans un solvant éther basique polaire tel que tétrahydrofuranne (THF), dioxanne, diglycine, diméthoxyéthane, à une température de préférence comprise entre 0° et 25°C.

Suivant un autre mode de réalisation, la coupure de la liaison P-phényle est effectuée par un métal alcalin (tel que Li, Na, K) non solubilisé, en présence d'un solvant éther basique polaire choisi parmi ceux cités ci-dessus à une température comprise entre 10° et 40°C.

De façon avantageuse, le phospholyl-métal alcalin est transformé en composé métallique tel Mg, Zn, Cd par action de l'halogénure métallique $MX_2$ correspondant où M = métal et X = Cl, Br ou I.

Les schémas réactionnels suivants illustrent ces différentes réactions. Dans ces schémas:

Ma = métal alcalin ; M = Mg, Zn ou Cd et x = Cl , Br ou I .

A

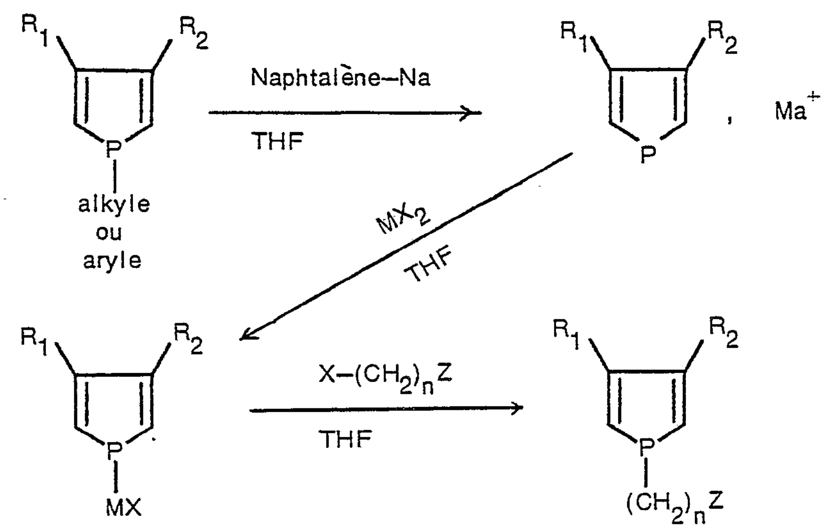


B

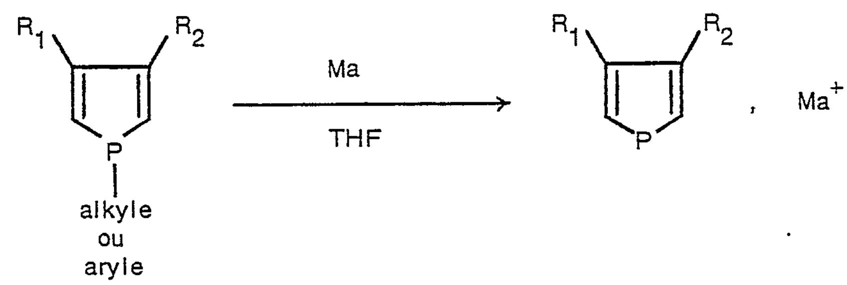


puis comme dans schéma A, réaction avec $MX_2$ puis $X—(CH_2)_nZ$.

Dans ces schémas, les symboles $R_1$, $R_2$, X et n ont la signification donnée précédemment.

Les exemples suivants sont donnés à titre illustratif et nullement limitatif de l'invention.

Exemple 1

*Obtention de l'adduit.*

a). Dans un réacteur à trois tubulures de 1000 $cm^3$ préalablement purgé à l'azote, on introduit 53,6 g de phényldibromo-phosphine (0,2 mole) et 35,8 g de phényldichlorophosphine (0,2 mole) dissous dans 10 $cm^3$ de chlorure de méthylène sec puis, trente minutes après, on ajoute 34,5 g de diméthyl-2,3-butadiène (0,4 mole + 5%).

Le mélange est abandonné à l'abri de la lumière. Il en résulte un produit solide hygroscopique.

b). On procédé comme sous a) mais en n'utilisant que de la phényldibromo-phosphine.

c). On procédé comme sous a) mais en n-utilisant que de la phényldichloro-phosphine et deux équivalents de diméthyl-2,3-butadiène.

d). *Préparation du phényl-1 diméthyl-3,4 phosphole*

Le réacteur décrit sous a) est muni d'un réfrigérant, lié à un vibro-mixeur d'une ampoule isobare puis placé sous atmosphère d'azote. On introduit 400 $cm^3$ d'hexane et 300 $cm^3$ de chlorure de méthylène secs et dégazés; l'adduit est cassé en plusieurs morceaux. Sous agitation, on introduit goutte à goutte 82 g d'alpha-picoline (0,8 mole + 10%) dissoute dans 100 $cm^3$ de chlorure de méthylène en maintenant la

température à 20°C. On maintient l'agitation jusqu'à disparition de l'adduit on a une phase supérieure jaune clair et une phase inférieure orange brun. On introduit une solution aqueuse d'acide chlorhydrique 3N jusqu'à obtention d'un test acide au papier pH (environ 60 $cm^3$). On décante sous atmosphère d'azote et lave la solution organique à l'eau (60 $cm^3$), puis par une solution saturée de carbonate de potassium (2 × 60 $cm^3$) jusque'à obtention d'un test neutre au papier pH, on sèche sur sulfate de sodium et concentre.

On obtient 66,8 g de produit pur vérifié en RMN du proton et du phosphore; il peut être distillé sous bon vide et sous atmosphère inerte; Eb/0,1 = 89—91°C. Rendement global: 83,5%.

Exemples 2 à 16

En traitant comme sous d) de l'exemple 1 les adduits obtenus comme décrit sous a), b) et c) suivant la nature de l'amine utilisée, on prépare le phényl-1 diméthyl-3,4 phosphole avec les rendements répertoriés dans le tableau ci-après.

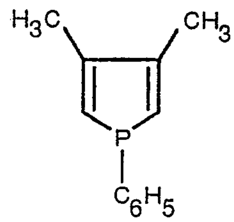

| Amine tertiaire | Préparation adduit | Rendement (%) |
|---|---|---|
| α-picoline | 1b | 83 |
| γ-picoline | 1b | 79 |
| Triéthylamine | 1b | 66 |
| Tétraméthylènediamine (TMEDA) | 1b | 78 |
| Ethyl-2-pyridine | 1b | 69 |
| Méthyl-morpholine | 1b | 76 |
| N-méthylimidazole | 1b | 73,5 |
| Pyridine | 1b | 74,5 |
| α-picoline | 1a | 72 |
| N-méthyl pyrrolidine | 1b | 78 |
| Ethyl-4-pyridine | 1b | 75 |
| N-méthyl pyrrolidine | 1a | 78 |
| TMEDA | 1a | 57 |
| α-picoline | 1c | 83 |

Exemple 17

a). Dans un réacteur à trois tubulures de 1000 $cm^3$ préablement purgé à l'azote, on place 22,8 g de phényldibromo-phosphine (0,085 mole) et 15,2 g de phényldichloro-phosphine (0,085 mole) dissous dans 10 $cm^3$ de chlorure de méthylène sec puis, trente minutes après, on ajoute 12 g d'isoprène (0,17 mole + 5%).

Le mélange est abandonné à l'abri de la lumière; le produit obtenu est un solide hygroscopique.

b). Préparation identique à la précédente mais n'utilisant que de la phényldibromo-phosphine.

c). *Phényl-1 méthyl-3 phosphole*

Le réacteur est muni d'un réfrigérant, d'un agitateur lié à un vibro-mixeur, d'une ampoule isobare puis placé sous atmosphère d'azote. On introduit 200 $cm^3$ d'hexane et 100 $cm^3$ de chlorure de méthylène secs; l'adduit préparé comme sous a) est cassé en plusieurs morceaux. Sous agitation, on introduit goutte à

goutte 32 g de N-méthyl pyrrolidine (0,34 mole + 10%) dissoute dans 100 $cm^3$ de chlorure de méthylène. On maintient l'agitation jusqu'à disparition de l'adduit. Après avoir traité comme sous d) de l'exemple 1, on obtient 23 g de produit brut que l'on distille. Eb/0,1 = 78—80°C. Rendement 60%.

Exemples 18 à 21

En traitant comme sous c) de l'exemple 17 les adduits décrits comme sous a) et b) suivant la nature de l'amine tertiaire, on prèpare le phényl-1 méthyl-3 phosphole avec les rendements suivants:

| Amine tertiaire | Préparation adduit | Rendement (%) |
|---|---|---|
| N-méthyl pyrrolidine | 17b | 72 |
| γ-picoline | 17b | 50 |
| α-picoline | 17b | 40 |
| N-méthyl imidazole | 17b | 22 |

Exemple 22

a) Dans un réacteur clos de 1000 $cm^3$ prévu pour résister à une pression de 5 bars, on place 80,4 g de phényldibromo-phosphine (0,3 mole) et 30 $cm^3$ de butadiène (0,3 mole + 5%). Le mélange est abandonné à l'abri de la lumière; le produit obtenu après dépressurisation du réacteur est un produit hygroscopique.

b) *Phényl-1-phosphole*

Le réacteur est muni d'un réfrigérant, d'un agitateur lié à un vibromixeur, d'une ampoule isobare puis placé sous atmosphère d'azote. On introduit 250 $cm^3$ d'hexane et 125 $cm^3$ de chlorure de méthylène secs; l'adduit préparé comme sous a) est cassé en plusieurs morceaux. Sous agitation, on introduit goutte à goutte 61,5 g d'alpha-picoline (0,6 mole + 10%) dissoute dans 125 $cm^3$ de chlorure de méthylène. On maintient l'agitation jusqu'à disparition de l'adduit et on traite comme sous d) de l'exemple 1. On obtient 32 g de produit brut que l'on distille. Eb/0,1 = 60—65°C. Rendement: 54%.

Exemple 23

En traitant comme sous b) de l'exemple 22, l'adduit obtenu comme sous a), on prépare le phényl-1-phosphole avec un rendement de 50% en utilisant la N-méthyl-pyrrolidine.

Les exemples suivants illustrent la préparation de phospholes P-fonctionnels selon l'invention dont les caractéristiques ont été facilement déterminées sur les formes sulfures (voir tableau ci-dessous).

Les spectres RMN ont été enregistrés à 60 MHz sur Perkin-Elmer R24A pour le proton à 36,447 MHz sur Bruker WP90 pour le phosphore. Les spectres I.R. ont été enregistrés sur Perkin-Elmer 297 et 457, les spectres de masse sur un appareil AEI MS—30 à 70 eV. Toutes les réactions ont été conduites sous argon avec du THF fraîchement distillé.

*Méthode A — Naphtalène sodé — $MgBr_2$*

Dans un Erlenmeyer rodé bien à sec, on dissout 6 g de naphtalène (0,047 mole) dans 100 $cm^3$ de THF. On ajoute 1 g de sodium (0,043 at-g) coupé en petits morceaux. Quand tout le sodium a réagi (1 heure environ), on ajuoute 4 $cm^3$ de phényl-1-diméthyl-3,4-phosphole (0,0213 mole). On laisse réagir 5 heures à température ambiante. On ajoute alors 4 g de $MgBr_2$ anhydre (0,0218 mole) et on laisse réagir encore 1 heure. On transvase sous argon dans une ampoule de coulée et on ajoute, goutte à goutte, à une solution de 0,025 mole de $X—(CH_2)_nZ$ dans 50 $cm^3$ de THF. On laisse agiter la nuit. Le lendemain, on ajoute 1 g de soufre en fleur (0,03 at-g), chauffe pendant 2 heures avec un bain d'huile à 70°C. On laisse refroidir, hydrolyse, neutralise éventuellement avec HCl dilué, chasse le THF, extrait le résidu au chlorure de méthylène, sèche sur $SO_4Na_2$ et évapore à sec. On se débarrasse de l'essentiel du naphtalène par sublimation à 40°C sous 1 torr. Le résidu est chromatographie sur gel de silice passant au tamis à mailles de 0,210 à 0,062 mm.

*Méthode B — Coupure au métal alcalin (tel que lithium).*

On met 0,15 g de lithium (0,09216 at-g) en grains en suspension dans 100 $cm^3$ de THF. On ajoute 2 $cm^3$ de phényl-1-diméthyl-3,4-phosphole (0,01 mole) et on laisse réagir à 25°C pendant 4 à 5 heures. On contrôle que la coupure est complète sur plaque de silicagel ($Et_20$ 50, Hexane 50). On ajoute alors, soit 2 g de $MgBr_2$ anhydre (0,011 mole) soit 2 g de $CdCl_2$ anhydre (0,01 mole) et on laisse agiter 1 h à température ambiante. Ensuite, on procédé comme pour la méthode A.

*Produit N° 60.* Réactif: $BrCH_2\underset{\underset{O}{\|}}{C}OEt$

Eluant: Hexane 50/$Et_2O$ 50
Analyse élémentaire: $C_{10}H_{15}O_2PS$

| | C (%) | H (%) |
|---|---|---|
| Calculé: | 52,16 | 6,57 |
| Trouvé: | 51,92 | 6,50 |

Spectre de masse: m/e 230 (M, 32%); 143 (M—$CH_2COOEt$, 100%)

*Produit N° 80.* Réactif $BrCH_2CH_2CN$
Eluant: Hexane 40, AcOEt 60

Analyse élémentaire: $C_9H_{12}NPS$

| | C (%) | H (%) | N (%) |
|---|---|---|---|
| Calculé: | 54,80 | 6,13 | 7,10 |
| Trouvé: | 55,06 | 6,07 | 6,91 |

Spectre de masse: m/e 197 (M, 44%); 143 (M—$CH_2CH_2CN$, 100%)

*Produit N° 90.* Réactif: 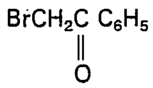

Eluant: Hexane 50 $Et_2O$ 50

Analyse élémentaire: $C_{14}H_{15}OPS$

| | C (%) | H (%) |
|---|---|---|
| Calculé: | 64,10 | 5,76 |
| Trouvé: | 64,22 | 5,74 |

Spectre de masse: m/e 262 (M, 26%); 143 (M—$CH_2COPh$, 100%)

*Produit N° 100.* Réactif: 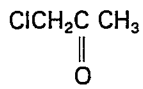

Eluant: Hexane 30 $Et_2O$ 70

Analyse élémentaire: $C_9H_{13}OPS$

| | C (%) | H (%) |
|---|---|---|
| Calculé: | 53,98 | 6,54 |
| Trouvé: | 54,80 | 6,46 |

Spectre de masse: m/e 200 (M, 45%); 143 (M—$CH_2COMe$, 100%)

*Produit N° 110.* Réactif: 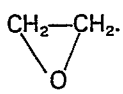

Dans ce cas précis, on verse la solution de réactif dans la solution de magnésium ou de cadmium.

Eluant: AcOEt
Analyse élémentaire: $C_9H_{13}OPS$

| | C (%) | H (%) |
|---|---|---|
| Calculé: | 51,05 | 6,96 |
| Trouvé: | 50,78 | 6,87 |

Spectre de masse: m/e (M, 46%); 144 (M—$CH_2CH_2O$, 100%).

TABLEAU

Proprietes des sulfures des phospholes P-fonctionnels

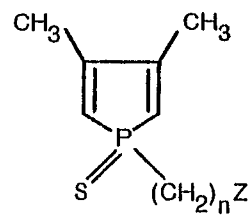

| $P(CH_2)_nZ$ | N° | Rendement % | | | F°C Kofler | $\delta^{31}P$ ($CDCl_3$) ($H_3PO_4$) | I.R. (KBr) | RMN du Proton ($CDCl_3$) | | | |
|---|---|---|---|---|---|---|---|---|---|---|---|
| | | | | | | | | Cycle | | $(CH_2)_nZ$ | |
| | | A | B | C | | | | $CH_3$ | $CH(J_{H-P})$ | $PCH_2(J_{H-P})$ | Z |
| $PCH_2\underset{O}{\underset{\|}{C}}OEt$ | 60 | 35 | | | 89 | 41,2 | $\nu_{CO}$ : 1728 $cm^{-1}$<br>$\nu_{PS}$ : 648 $cm^{-1}$ | 2,13 | 6,1 (31) | 3,2 (14) | $CH_3$ : 1,37<br>$CH_3$ : 4,23 J : 7Hz |
| $PCH_2CH_2CN$ | 80 | 76 | 65 | 70 | 95–6 | 46,5 | $\nu_{CN}$ : 2245 $cm^{-1}$<br>$\nu_{PS}$ : 635 $cm^{-1}$ | 2,15 | 6,03 (31) | $PCH_2CH_2$ : massif complexe 2,2 – 3,0 | |
| $PCH_2\underset{O}{\underset{\|}{C}}C_6H_5$ | 90 | 22 | | 18 | 131 | 40,7 | $\nu_{CO}$ : 1670 $cm^{-1}$<br>$\nu_{PS}$ : 632 $cm^{-1}$ | 2,1 | 6,05 (31) | 3,9 (15) | $C_6H_5$ : 7,25 – 7.95 |
| $PCH_2\underset{O}{\underset{\|}{C}}CH_3$ | 100 | 45 | 33 | 45 | 122 | 38,8 | $\nu_{CO}$ : 1710 $cm^{-1}$<br>$\nu_{PS}$ : 635 $cm^{-1}$ | 2,03 | 6,00 (15) | 3,17 (15) | $CH_3$ : 2,3 |
| $PCH_2CH_2OH$ | 110 | 45 | 12 | 18 | 118 | 45,5 | $\nu_{OH}$ : 3380 $cm^{-1}$<br>$\nu_{PS}$ : 615 $cm^{-1}$ | 2,03 | 5,93 (30) | 3,97 (20) | OH : 2,92<br>$CH_2$ : 2,20($J_{H-H}$ : 5,5 Hz) |

De façon plus particuliére, l'exemple suivant donne la préparation et les propriétés du cyanométhyl-1-diméthyl-3,4-phosphole de formule:

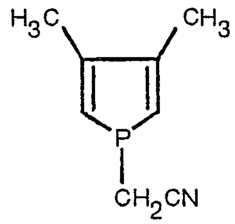

Toute l'opération est conduite sous gaz inerte (argon ou azote).

Dans un Erlenmeyer muni d'un agitateur magnétique on place: 4 $cm^3$ de phényl-1 diméthyl-3,4 phosphole et 0,3 g de lithium en granulés dans 200 $cm^3$ de THF (tétrahydrofuranne) anhydre. La solution, incolore au début, vire au rouge foncé. On agite en tout 5 heures entre 25 et 30°C. On ajoute ensuite 4 g de bromure de magnésium anhydre et on poursuit l'agitation pendant 1 heure (décoloration partielle). Aprés élimination de l'excès de lithium non transformé, la solution ainsi obtenue est transférée, à l'abri de l'humidité et de l'air, dans une ampoule de coulée montée sur un réacteur de 500 $cm^3$ contenant 4 g de chloracétonitrile dans 50 $cm^3$ de THF anhydre. La solution magnésienne est ajoutée goutte à goutte dans le nitrile avec agitation. On laisse agiter une nuit à température ordinaire. Après 18 heures, on hydrolyse avec 50 $cm^3$ d'eau distillée, on évapore le THF et on extrait le phosphole de la phase aqueuse résiduelle avec de l'hexane. La solution est séchée, sur $SO_4Na_2$. Après filtration et évaporation de l'hexane, on obtient ainsi 1,14 g de phosphole sous la forme d'une solide cristallisé incolore (rendement: 35%).

Schéma réactionnel :

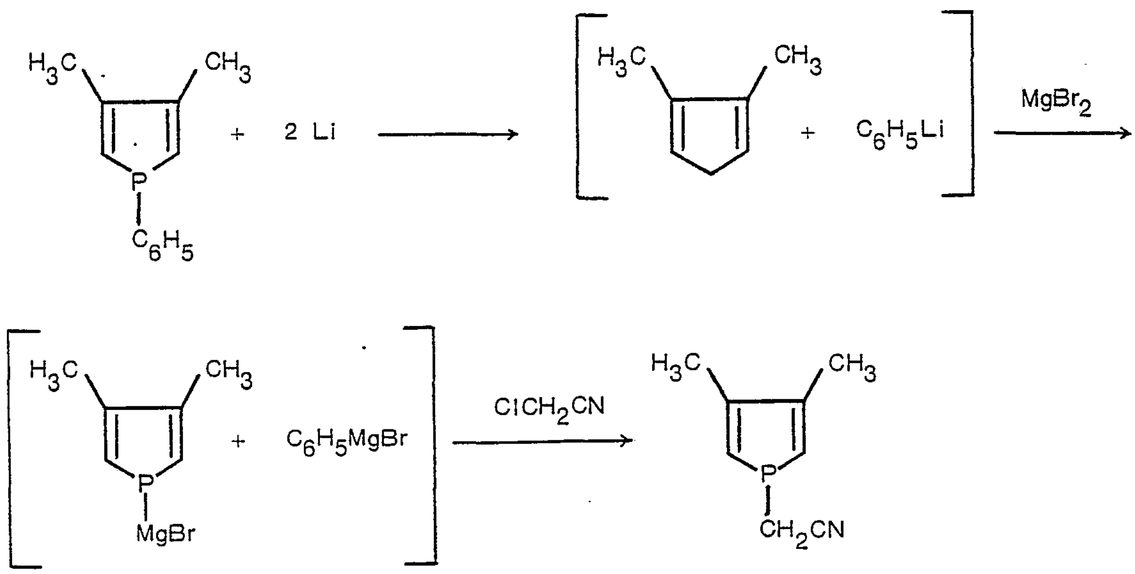


*Propriétés du cyanométhyl-1 diméthyl-3,4-phosphole:*

RMN $^2$H ($CDCl_3$, TMS interne): δ 2,07 (d, $^4J$(H—P) 3Hz, 6H, $CH_3$); 2,63 (d, $^2J$(H—P) 5 Hz, 2H, $CH_2CN$); 6,12 (d, $^2J$(H—P) 40 Hz, 2H, CH—P) ppm RMN $^{31}P$ ($CHCl_3$, $H_3PO_4$ externe, δ + champ faible) δ − 23,4 ppm.

*Analyse:* $C_8H_{10}NP$

| | C (%) | H (%) | N (%) |
|---|---|---|---|
| Calculé: | 63,57 | 6,62 | 9,27 |
| Trouvé: | 63,9 | 6,8 | 9,0 |

**Revendications**

1. Procédé de fabrication de phospholes et phospholes P-fonctionnels répondant à la formule générale:

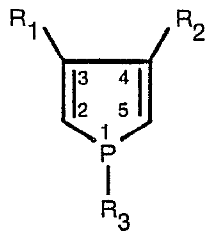

dans laquelle

$R_1$ et $R_2$ sont identiques ou différents et représentent de l'hydrogène ou un groupe alkyle inférieur en $C_1$ à $C_4$ tel qu'un groupe méthyle, et

$R_3$ représente un groupe aryle (tel que $—C_6H_5$); ou un groupe aryle substitué (tel que $—CH_2C_6H_5$); ou un groupe alkyle (tel que $—CH_3$, $—C_2H_5$, $—C_3H_7$ à $C_{12}H_{25}$); ou un groupe $—(CH_2)_nZ$ où Z désigne une fonction du type —COO-alkyle (telle que $—COOC_2H_5$), —CN, —CO-aryle (telle que $—COC_6H_5$), —CO-alkyle (telle que $—COCH_3$) ou —OH et n = 1 ou 2, procédé caractérisé par le fait que l'on fait réagir au moins une alkyl- ou arylhalogéno-phosphine avec un butadiène dont les carbones en positions 2 et/ou 3 portent éventuellement un substituant alkyle inférieur, qu l'on soumet l'adduit cyclique résultant de cette réaction à l'action d'une amine tertiaire choisie parmi celles ayant un pKa compris entre 5 et 11, puis qu'on soumet le produit résultant à une réaction consistant à couper la liaison P-aryle ou P-alkyle et obtenir un organo-métallique, puis si on désire le produit correspondant P-fonctionnel, qu'on fait réagir ledit organo-métallique avec un composé $X—(CH_2)_nZ$ où X est un halogène et Z et n ont la signification précemment donnée.

2. Procédé selon la revendication 1, caractérisé par le fait que l'on fait réagir un mélange de deux halogéno-phosphines différentes.

3. Procédé selon la revendication 1 ou 2, caractérisé par le fait que lorsque les arylhalogénophosphines sont des phénylhalogénophosphines, celles-ci sont avantageusement choisies parmi les phényldichlorophosphines, et les phényldibromophosphines et lorsqu'on a recours à des mélanges de deux phénylhalogénophosphines différentes, ces dernières sont utilisées en proportions égales.

4. Procédé selon l'une quelconque des revendications 1 à 3, caractérisé par le fait que les amines sont choisies parmi les picolines, triéthylamine, tétraméthyléthylène diamine, éthyl-2 pyridine, méthyl-morpholine, N-méthyl-imidazole, pyridine, N-méthyl-pyrrolidine, éthyl-4 pyridine.

5. Procédé selon l'une quelconque des revendications 2 ou 3, caractérisé par le fait que la réaction entre la ou les halogéno-phosphines et un butadiène est effectuée vers 0°C en récipient clos sous atmosphère inerte et en l'absence de tout solvant organique et la réaction du produit résultant avec l'amine choisie est conduite au sein d'un mélange de diluants organiques inertes dont l'un est de préférence un hydrocarbure saturé.

6. Procédé selon la revendication 1, caractérisé par le fait que la coupure de la liaison P-aryle ou P-alkyle est effectuée par l'action d'un métal alcalin sous forme d'anions radicaux solubilisés (du type naphtalène-métal alcalin) dans un solvant éther basique polaire comme le tétrahydrofuranne (THF), à une température comprise entre 0° et 25°C.

7. Procédé selon la revendication 1, caractérisé par le fait que la coupure de la liaison P-aryle ou P-alkyle est effectuée par l'action d'un métal alcalin non solubilisé (tel que Li) en présence d'un solvant éther basique polaire (tel que THF) entre 10° et 40°C.

8. Procédé selon l'une quelconque des revendications 6 ou 7, caractérisé par le fait que le phospholyl-métal alcalin est transformé en un organo-métallique par action d'un halogénure métallique $MX_2$ où M représente Mg, Zn, ou Cd et X représente Cl, Br ou I.

**Patentansprüche**

1. Verfahren zur Herstellung von Phospholen und P-funktionellen Phospholen der allgemeinen Formel:

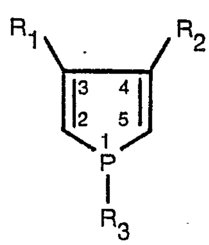

worin bedeuten:

$R_1$ und $R_2$, die gleich oder verschieden sein können, ein Wasserstoffatom oder eine niedere $C_1$—$C_4$-Alkylgruppe, wie eine Methylgruppe, und

$R_3$ eine Arylgruppe (wie —$C_6H_5$); oder eine substituierte Arylgruppe (wie —$CH_2C_6H_5$); oder eine Alkylgruppe (wie —$CH_3$, —$C_2H_5$, —$C_3H_7$ bis $C_{12}H_{25}$); oder eine Gruppe —$(CH_2)_nZ$, worin Z eine Funktion des Typs —COO-Alkyl (wie —$COOC_2H_5$), —CN, —CO-Aryl (wie —$COC_6H_5$), —CO-Alkyl (wie —$COCH_3$) oder —OH darstellt und n = 1 oder 2 bedeutet, dadurch gekennzeichnet, daß man wenigstens ein Alkyl- oder Arylhalogenphosphin mit einem Butadien, dessen Kohlenstoffatome in der 2- und/oder 3-Stellung gegebenenfalls einen niederen Alkylsubstituenten tragen, reagieren läßt, das aus dieser Reaktion resultierende, cyclische Addukt der Einwirkung eines tertiären Amins, ausgewählt unter denen mit einem $pK_a$-Wert zwischen 5 und 11, unterwirft, anschließend das erhaltene Produkt einer Reaktion zur Aufhebung der Bindung P-Aryl oder P-Alkyl und Erhalt einer metallorganischen Verbindung unterwirft, anschließend, im Fall eines gewünschten, P-funktionellen Produktes, diese metallorganische Verbindung mit einer Verbindung X—$(CH_3)_nZ$, worin X ein Halogen ist und Z und n die zuvor gegebenen Bedeutungen besitzen, reagieren läßt.

2. Verfahren nach Anspruch 1, dadurch gekennzeichnet, daß man ein Gemisch von zwei unterschiedlichen Halogenphosphinen reagieren läßt.

3. Verfahren nach Anspruch 1 oder 2, dadurch gekennzeichnet, daß man im Fall von Phenylhalogenphosphinen als Arylhalogenphosphinen, diese vorteilhafterweise unter Phenyldichlorphosphinen und Phenyldibromphosphinen auswählt, und daß man im Fall des Einsatzes von Gemischen von zwei unterschiedlichen Phenylhalogenphosphinen diese in gleichen Anteilen einsetzt.

4. Verfahren nach einem der Ansprüche 1 bis 3, dadurch gekennzeichnet, daß man die Amine unter Picolinen, Triethylamin, Tetramethylethylendiamin, 2-Ethylpyridin, Methylmorpholin, N-Methylimidazol, Pyridin, N-Methylpyrrolidin, 4-Ethyl-pyridin auswählt.

5. Verfahren nach einem der Ansprüche 2 oder 3, dadurch gekennzeichnet, daß die Reaktion zwischen dem oder den Halogenphosphin/en und einem Butadien bei 0°C in einem geschlossenen Gefäß unter Inertatmosphäre und bei Abwesenheit jeden organischen Lösungsmittels durchgeführt wird, und daß die Reaktion des erhaltenen Produktes mit dem ausgewählten Amin in einem Gemisch mit inerten, organischen Lösungsmitteln, wovon eines vorzugsweise ein gesättigter Kohlenwasserstoff ist, durchgeführt wird.

6. Verfahren nach Anspruch 1, dadurch gekennzeichnet, daß die Aufhebung der Bindung P-Aryl oder P-Alkyl durch Einwirkung eines Alkalimetalls in Form von solubilisierten, radikalischen Anionen (vom Typ Naphthalin-Alkylimetall) in einem polaren, basischen Etherlösungsmittel wie Tetrahydrofuran (THF) bei einer Temperature zwischen 0° und 25°C durchgeführt wird.

7. Verfahren nach Anspruch 1, dadurch gekennzeichnet, daß die Aufhebung der Bindung P-Aryl oder P-Alkyl durch einwirkung eines nicht solubilisierten Alkalimetalls (wie Li) in Anwesenheit eines polaren, basischen Etherlösungsmittels (wie THF) zwischen 10° und 40°C durchgeführt wird.

8. Verfahren nach einem der Ansprüche 6 oder 7, dadurch gekennzeichnet, daß das Phospholyl-Alkalimetall in eine metallorganische Verbindung durch Einwirkung eines Metallhalogenids $MX_2$, worin M: Mg, Zn oder Cd bedeutet und X: Cl, Br oder J bedeutet, überführt wird.

**Claims**

1. A process for preparation of phospholes and P-functional phospholes having the general formula:

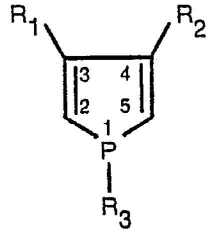

in which:

$R_1$ and $R_2$ are identical or different and represent hydrogen or a lower $C_1$—$C_4$-alkyl group such as a methyl group, and

$R_3$ represents an aryl group (such as —$C_6H_5$) or a substituted aryl group (such as —$CH_2C_6H_5$); or an alkyl group (such as —$CH_3$, —$C_2H_5$, —$C_3H_7$ to $C_{12}H_{25}$); or a —$(CH_2)_nZ$ group, in which Z designates a function of the —COO-alkyl (such as —$COOC_2H_5$), —CN, —CO-aryl (such as —$COC_6H_5$), —CO-alkyl (such as —$COCH_3$) or —OH type, and n = 1 or 2, said process being characterized by reacting at least one alkyl or aryl halogenophosphine with a butadiene of which the carbons in 2- and/or 3-positions possibly carry a lower alkyl substituent, submitting the cyclic adduct resulting from such reaction to the action of a tertiary amine selected among those having a pKa comprised between 5 and 11, then submitting the resulting product to a reaction consisting of cutting the P-aryl or P-alkyl bond and obtaining an organometallic, then, if desired,

the corresponding P-functional product, reacting said organometallic with a X—$(CH_2)_nZ$ compound, in which X is a halogen, and Z and n have the meaning given above.

2. A process according to claim 1, characterized by reacting a mixture of two different halogen-phosphines.

3. A process according to claim 1 or 2, characterized in that, when the arylhalogenophosphines are phenylhalogenophosphines, these are advantageously selected among phenyldichlorophosphines and the phenyldibromophosphines and when mixtures of two different phenylhalogenophosphines are used they are used in equal proportions.

4. A process according to any one of claims 1 to 3, characterized by selecting the amines among picolines, triethylamine, tetramethylethylenediamine, 2-ethyl-pyridine, methyl-morpholine, N-methylimidazol, pyridine, N-methylpyrrolidine, 4-ethyl-pyridine.

5. A process according to any one of claims 2 or 3, characterized by effecting the reaction between the halogenophosphine or halogenophosphines and a butadiene at about 0°C in a closed container under inert atmosphere and in the absence of any organic solvent and by conducting the reaction of the resulting product with the selected amine within a mixture of inert organic diluents one of which is preferably a saturated hydrocarbon.

6. A process according to claim 1, characterized by effecting the cutting of the P-aryl or P-alkyl bond by the action of an alkaline metal in form of solubilized anion radicals (of the alkaline naphthalene-metal type) in a basic polar ether solvent such as tetrahydrofurane (THF) at a temperature comprised between 0° and 25°C.

7. A process according to claim 1, characterized by effecting the cutting of the P-aryl or P-alkyl bond by the action of a non solubilized alkaline metal (such as Li) in the presence of a basic polar ether solvent (such as THF) between 10° and 40°C.

8. A process according to any one of claims 6 or 7, characterized by transforming the alkaline phospholyl-metal to an organometallic by the action of a metallic $MX_2$ halide in which M represents Mg, Zn, or Cd, and X represents Cl, Br or I.